# EUROPÄISCHE PATENTSCHRIFT

(11) **EP 1 682 560 B1**
(45) Veröffentlichungstag und Bekanntmachung des Hinweises auf die Patenterteilung: **01.08.2007**
(21) Anmeldenummer: 04790696.1
(22) Anmeldetag: 21.10.2004
(51) Int. Cl.: C07F 15/00

(54) **VERFAHREN ZUR HERSTELLUNG VON HETEROLEPTISCHEN, ORTHO-METALLIERTEN ORGANOMETALL-VERBINDUNGEN**
METHOD FOR THE PRODUCTION OF HETEROLEPTIC ORTHO-METALLATED ORGANOMETALLIC COMPOUNDS
PROCEDE POUR PRODUIRE DES COMPOSES ORGANOMETALLIQUES HETEROLEPTIQUES AYANT SUBI UNE ORTHOMETALLATION

(30) Priorität: 30.10.2003 DE 10350606
(43) Veröffentlichungstag der Anmeldung: 26.07.2006
(73) Patentinhaber: Merck Patent GmbH, 64293 Darmstadt (DE)
(72) Erfinder: STÖSSEL, Philipp, 60487 Frankfurt am Main (DE); BÜSING, Arne, 65929 Frankfurt (DE); BACH, Ingrid, 65812 Bad Soden (DE)
(86) Internationale Anmeldenummer: PCT/EP2004/011889
(87) Internationale Veröffentlichungsnummer: WO 2005/042548

(56) Entgegenhaltungen:
- BEEBY, ANDREW ET AL: "Tuning the emission of cyclometalated iridium complexes by simple ligand modification" JOURNAL OF MATERIALS CHEMISTRY , 13(1), 80-83 CODEN: JMACEP; ISSN: 0959-9428, 2003, XP002313542 in der Anmeldung erwähnt

## Beschreibung

Metallorganische Verbindungen - speziell Verbindungen der d⁸-Metalle - werden als funktionelle Materialien in einer Reihe von verschiedenartigen Anwendungen, die im weitesten Sinne der Elektronikindustrie zugerechnet werden können, für den Einsatz als farbgebende Komponenten benötigt. Bei den auf rein organischen Komponenten basierenden organischen Elektrolumineszenz-Vorrichtungen (allg. Beschreibung des Aufbaus siehe: US 4,539,507 und US 5,151,629) bzw. deren Einzelbauteilen, den organischen lichtemittierenden Dioden (OLEDs) ist die Markteinführung bereits erfolgt, wie beispielsweise die Autoradios mit OLED-Display der Firma Pioneer oder die Digitalkamera mit OLED-Display der Firma Kodak belegen. Weitere derartige Produkte stehen kurz vor der Einführung. Dennoch sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln. Eine Entwicklung hierzu, die sich in den letzten Jahren abzeichnet, ist der Einsatz metallorganischer Komplexe, die Phosphoreszenz statt Fluoreszenz zeigen (M. A. Baldo et al., Appl. Phys. Lett. 1999, 75, 4-6). Aus theoretischen Spin-statistischen Gründen ist unter Verwendung solcher Verbindungen eine bis zu vierfache Energie- und Leistungseffizienz möglich. Ob sich diese Entwicklung allerdings durchsetzen wird, hängt zum einen stark davon ab, ob entsprechende Device-Kompositionen gefunden werden können, die diese Vorteile (Triplett-Emission = Phosphoreszenz gegenüber Singulett-Emission = Fluoreszenz) auch in OLEDs umsetzen können. Als wesentliche Bedingungen für die praktische Anwendung sind hier insbesondere eine hohe operative Lebensdauer, eine hohe thermische Stabilität und eine niedrige Einsatz- und Betriebsspannung zu nennen.
Zum anderen muss ein effizienter chemischer Zugang zu den entsprechenden, hochreinen Metallkomplexen, insbesondere zu Organo-lridium-Verbihdungen, gegeben sein. Dies ist insbesondere unter Berücksichtigung der Knappheit von Iridium von maßgebender Bedeutung für die erfolgreiche Nutzung der genannten Verbindungsklasse.

In der Literatur sind mehrere Verfahren zur Darstellung bis- und tris-ortho-metallierter Organometall-Verbindungen beschrieben worden, die im Folgenden am Beispiel entsprechender Iridium-Komplexe näher erläutert werden sollen.

Der nächst liegende Stand der Technik zur Synthese homoleptischer, tris-ortho-metallierter Iridiumkomplexe, wie beispielsweise *fac*-Tris[2-(2-pyridinyl-κN)phenyl-κC]-iridium(III), ist in WO 02/060910 und der nicht offen gelegten Anmeldung DE 10314102.2 beschrieben. Diese Verfahren führen in sehr guten Ausbeuten zu hochreinen Komplexen, bei deren weiteren Aufreinigung auf chromatographische Methoden verzichtet werden kann. Allerdings sind diese Methoden nicht für die Synthese heteroleptischer tris-ortho-metallierter Iridiumkomplexe geeignet, weil die drei Liganden im selben Reaktionsschritt eingeführt werden und unterschiedliche Liganden hier zu Mischungen führen.

Für die Anwendung sind jedoch auch heteroleptische ortho-metallierte Iridiumkomplexe von großem Interesse: Zunächst einmal können durch die unterschiedlichen Liganden unterschiedliche elektronische Eigenschaften in einen einzigen Komplex inkorporiert werden. So kann durch unterschiedliche Liganden beispielsweise eine Feinabstimmung der Emissionsfarbe und/oder der Ladungstransporteigenschaften erfolgen. Eine weitere Eigenschaft, die diese heteroleptischen Komplexe allgemein zeigen, ist eine höhere Glastemperatur. Dies ist insbesondere für niedermolekulare Verbindungen ein entscheidender Vorteil, da dies eine Voraussetzung für die Verwendung dieser Verbindungen in OLEDs ist. Weiterhin sind heteroleptische Komplexe im Allgemeinen besser löslich und lassen sich dadurch leichter, beispielsweise durch Umkristallisation, aufreinigen bzw. auch aus Lösung verarbeiten. Insbesondere können heteroleptische Komplexe, die mit zwei polymerisierbaren Gruppen funktionalisiert sind, als Monomere kovalent in Polymere eingebaut werden. Polymere bieten gegenüber aufdampfbaren niedermolekularen Verbindungen den Vorteil, dass sie aus Lösung verarbeitet werden können, was langfristig deutliche Vorteile gegenüber technologisch aufwändigen Vakuum-Aufdampfprozessen bieten sollte. Die Verwendung solcher Iridium-Komplexe in Polymeren wird als nächster Schritt in der Weiterentwicklung lichtemittierender Polymere diskutiert.
Deshalb wäre es wünschenswert, eine Methode zur Verfügung zu haben, die breit anwendbar ist und die Zugänglichkeit zu heteroleptischen Iridiumkomplexen erlaubt, insbesondere auch zu einpolymerisierbaren, heteroleptischen Iridiumkomplexen.

In der Literatur sind weitere Verfahren zur Synthese homoleptischer, ortho-metallierter Iridiumkomplexe beschrieben, die sich auch für die Synthese heteroleptischer Komplexe anpassen lassen:
Homoleptische Komplexe können beispielsweise durch Umsetzung von Di-(µ-chloro)tetrakis[2-(2-pyridinyl-κN)phenyl-κC]di-iridium(III) mit Phenylpyridin und der zweifach molaren Menge an Silbertrifluormethansulfonat, bezogen auf das Di-(µ-chloro)tetrakis[2-(2-Nyridinyl-κN)phenyl-κC]di-iridium(III), erhalten werden. Nach chromatographischer Aufeinigung erhalten die Autoren Tris[2-(2-pyridinyl-κN)phenyl-κC]-iridium(III) in 75 %iger Ausbeute (M. G. Colombo et al., Inorg. Chem. 1994, 33, 545-550). In Analogie dazu sind auch heteroleptische Komplexe zugänglich, wenn statt Phenylpyridin ein unterschiedlicher Ligand eingesetzt wird (z. B. A. Beeby et al., J. Mater. Chem. 2003, 13, 80-83). Neben der chromatographischen Aufreinigung, die mit Hilfe umweltschädlicher, halogenierter Kohlenwasserstoffe erfolgt, ist die Verwendung der großen Menge an Silbersalzen nachteilig. Zunächst macht die Verwendung teurer Silberverbindungen die Synthese zusätzlich aufwändig. Des Weiteren liefern verbleibende Spuren von Silberchlorid kolloidales Silber, das sich nur schwer oder überhaupt nicht abtrennen lässt, wodurch das so hergestellte Material für die Anwendung in OLEDs wenig brauchbar wird, da allgemein anerkannt ist, dass hierfür hochreines Material benötigt wird. Außerdem ist diese Syntheseroute allgemein problematisch, da sie gemäß Thompson *et al.* (WO 01/41512) nur für wenige ausgewählte Liganden gut funktioniert.

Eine weitere Synthesemöglichkeit geht ebenfalls aus von Di-(µ-chloro)tetrakis[2-(2-pyridinyl-κN)phenyl-κC]di-iridium(III): Dieses wird direkt mit einem weiteren Liganden umgesetzt, wie beispielsweise in EP 1239526 und WO 01/41512 beschrieben. In beiden Fällen ist der zusätzliche Ligand ein β-Diketonat oder eine verwandte Verbindung. Diese Komplexe stellen heteroleptische, ortho-metallierte Verbindungen dar, jedoch keine tris-ortho-metallierten Komplexe. Allerdings sind tris-ortho-metallierte Komplexe auf Dauer zu bevorzugen; da diese vermutlich, ohne damit an eine bestimmte Theorie gebunden sein zu wollen, höhere Stabilitäten und damit höhere Lebensdauern aufweisen als Verbindungen, die β-Diketonate oder ähnliche Liganden enthalten.

Aus den oben beschriebenen β-Diketonat-haltigen Komplexen sind durch Umsetzung mit einem weiteren Liganden auch tris-ortho-metallierte Iridium-Komplexe zugänglich, wie beispielsweise beschrieben in US 20030162299. Allerdings zeigt diese Methode deutliche Nachteile: Erstens sind relativ viele Schritte nötig, die von Iridium-haltigen Edukten ausgehen (Synthese des verbrückten Iridium-Dimers [L₂Ir(µ-Cl)]₂, Umsetzung mit dem β-Diketonat, anschließend weitere Umsetzung mit einem anderen Liganden). Weiterhin sind die Ausbeuten mit ca. 45 % sehr niedrig, und für die Aufreinigung sind chromatographische Verfahren nötig, was dieses Verfahren für industrielle Anwendungen wenig interessant macht. Insbesondere in Anbetracht der Seltenheit von Iridium ist es wünschenswert, eine ressourcenschonende Methode zur Verfügung zu haben, bei der nur in wenigen Schritten Iridium-haltige Edukte eingesetzt werden und bei der diese Schritte jeweils mit hohen Ausbeuten ablaufen.

Dihalogenierte, heteroleptische, tris-ortho-metallierte Iridiumkomplexe sind weiterhin zugänglich durch Halogenierung eines entsprechenden homoleptischen Komplexes, wie in WO 02/068435 beschrieben. Allerdings sind durch dieses Verfahren vor allem solche Komplexe leicht zugänglich, deren Liganden auf demselben Ligandensystem basieren. Heteroleptische Komplexe mit unterschiedlichen Ligandensystemen können zwar auch dihalogeniert werden; jedoch fehlt ein spezifischer und guter Zugang zu den entsprechenden heteroleptischen Ausgangsverbindungen.

Eine weitere Methode, um zu heteroleptischen Iridium-Komplexen zu gelangen, ist beschrieben in der nicht offen gelegten Anmeldung DE 10223337.3. Dort werden aus dem verbrückten Iridium-Dimer [L₂Ir(µ-Cl)]₂ homo- und heteroleptische Komplexe gewonnen, indem die Umsetzung des Dimers mit dem Liganden in Gegenwart einer Lewis-Säure durchgeführt wird. Diese Methode ist für eine Vielzahl von Liganden mit gutem Ergebnis anzuwenden. Es fiel jedoch auf, dass bei anderen Liganden die Synthese schlechter oder unter Umständen gar nicht mehr funktionierte bzw. zu Produktgemischen führte. So erhielt man beispielsweise bei der Umsetzung mit Pyridylbenzothiophen das Produkt in einer Reinheit von nur 91 % und musste es chromatographisch aufreinigen.

Auch die Synthese bis-ortho-metallierter, heteroleptischer Palladiumkomplexe ist in der Literatur beschrieben (P. Jolliet et al., Inorg. Chem. 1996, 35, 4883). Hier wird von einem chloro-verbrückten zweikernigen Palladiumkomplex ausgegangen. Dieser wird umgesetzt mit Et₂S zum entsprechenden einkernigen Komplex [PdL(Et₂S)Cl], der dann weiter umgesetzt wird mit dem Lithiumderivat des zweiten Liganden. Allerdings wurden bei dieser Reaktion sehr schlechte Ausbeuten (17- 26 %) erzielt. Außerdem musste der Komplex chromatographisch aufgereinigt werden, was für die industrielle Anwendung ungeeignet ist, und diese Aufreinigung erfolgte mit gesundheitlich bedenklichen Lösemitteln, wie chlorierten Kohlenwasserstoffen.

Aufgabe dieser Erfindung war also zum einen die Bereitstellung eines breit anwendbaren Verfahrens zur Synthese heteroleptischer Metall-Komplexe. Insbesondere sollte die Bereitstellung einer Vielfalt homo- und heteroleptischer, funktionalisierter, einpolymerisierbarer Komplexe untersucht werden. Ein weitere Aufgabe der Erfindung war es, ein Verfahren zu finden, das ohne aufwändige Aufreinigung mittels chromatographischer Methoden auskommt.
Es wurde nun überraschend gefunden, dass solche heteroleptischen Komplexe sehr rein und in guter Ausbeute anfallen, wenn das leicht zugängliche, verbrückte Metall-Dimer [LₙM(µ-Y)]₂ mit einer reaktiven metallorganischen Verbindung eines weiteren Liganden umgesetzt wird. Dabei wurde gefunden, dass dieses Verfahren allgemein sehr gut funktioniert, unabhängig vom eingesetzten Liganden. Nach diesem Verfahren ergibt sich ein weit anwendbarer Zugang zu heteroleptischen Iridium-Komplexen, die Reinheiten über > 99,0 % aufweisen. Bei geeigneter Wahl der Reaktionsparameter, wie Temperatur, Reaktionszeiten und Lösemittel, werden dabei reproduzierbar Produkte in 90 - 95 %iger Ausbeute erhalten, die ohne die Verwendung chromatographischer Methoden durch Umkristallisation aufgereinigt werden können. Insbesondere ist durch diese Methode auch ein einfacher und effizienter Zugang zu dihalogenierten Iridium-Komplexen gegeben, die als Monomere für die Polymerisation genutzt werden können.

Gegenstand der vorliegenden Erfindung ist ein Verfahren zur Herstellung von Verbindungen (I), 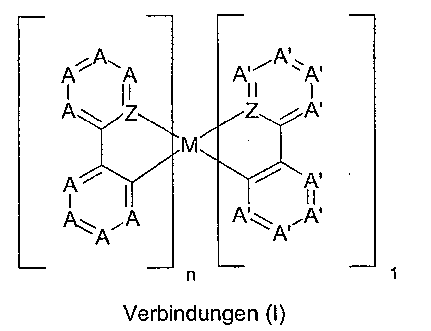 wobei für die verwendeten Symbole und Indizes Folgendes gilt:
- M: ist gleich oder verschieden bei jedem Auftreten Rh, Ir, Pd oder Pt;
- Z: ist gleich oder verschieden bei jedem Auftreten N oder P, bevorzugt N;
- A, A': ist gleich oder verschieden bei jedem Auftreten N, C-H oder C-R bzw. C-R'; oder aber zwei benachbarte Ringatome A-A bzw. A'-A' stehen bei jedem Auftreten gleich oder verschieden für S, O, Se oder N-R¹ mit der Maßgabe, dass diese Einheiten nicht mehr als einmal pro Ring auftreten; bevorzugt ist A bzw. A' C-H oder C-R bzw. C-R'; weiterhin bevorzugt sind zwei benachbarte Ringatome A-A bzw. A'-A' gleich S;
- R, R': ist gleich oder verschieden bei jedem Auftreten F, CI, Br, NO₂, CN, eine geradkettige, verzweigte oder cyclische Alkyl- oder Alkoxygruppe mit 1 bis 20 C-Atomen, wobei ein oder mehrere nicht benachbarte CH₂-Gruppen durch -CR¹=CR¹-, -C≡C-, -O-, -S-, -NR¹-, oder -CONR¹- ersetzt sein können und wobei ein oder mehrere H-Atome durch F ersetzt sein können, oder eine Aryl-, Heteroaryl-, Aryloxy- oder Arylaminogruppe mit 4 bis 14 C-Atomen, die durch einen oder mehrere nicht aromatische Reste R substituiert sein können, wobei mehrere Substituenten R, sowohl am selben Ring als auch an den beiden unterschiedlichen Ringen zusammen wiederum ein weiteres mono- oder polycyclisches, aliphatisches oder aromatisches Ringsystem aufspannen können;
- R¹: sind gleich oder verschieden bei jedem Auftreten H oder ein aliphatischer oder aromatischer Kohlenwasserstoffrest mit 1 bis 20 C- Atomen;
- n: ist 1 für M = Pd oder Pt und ist 2 für M = Rh oder lr;
durch Umsetzung einer Verbindung (la), 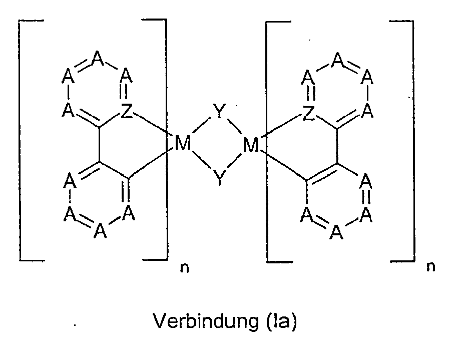 worin gilt:
- Y: ist bei jedem Auftreten gleich oder verschieden F, Cl, Br, l, OR¹, R¹COO, SR¹, N(R¹)2;
und die anderen Symbole und Indizes sind wie für Verbindung (I) definiert,
dadurch gekennzeichnet, dass Verbindung (la) mit einer metallorganischen Verbindung (Ib) umgesetzt wird, 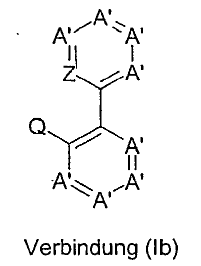 wobei Q für ein Alkalimetall, ein Erdalkalimetall oder Erdalkalihalogenid, Trialkylzinn oder Zink oder ein Zinkhalogenid steht und gegebenenfalls noch weitere organische Reste tragen kann und die anderen Symbole und Indizes die unter Verbindung (I) genannte Bedeutung haben.

Dabei sei besonders hervorgehoben, dass mit diesem Verfahren zwar auch homoleptische Komplexe zugänglich sind, die Besonderheit des Verfahrens jedoch ist, dass es den sauberen Zugang zu heteroleptischen Komplexen erlaubt. Ein heteroleptischer Komplex (Verbindung I) wird dann erhalten, wenn die Liganden in Verbindung (la) ungleich dem Liganden sind, der aus Verbindung (Ib) durch Koordination an das Zentralatom entstehen.

Zweikernige Metallkomplexe, die durch Gruppen Y überbrückt werden, wie Verbindung (la), werden im Folgenden als "verbrücktes Metall-Dimer", bzw. [LₙM(µ-Y)]₂ abgekürzt, wobei L allgemein für einen Liganden der Klasse der Phenylpyridine oder Derivaten, wie oben unter Formel (I) definiert, steht.

Das erfindungsgemäße Verfahren wird durch das Schema 1 erläutert.

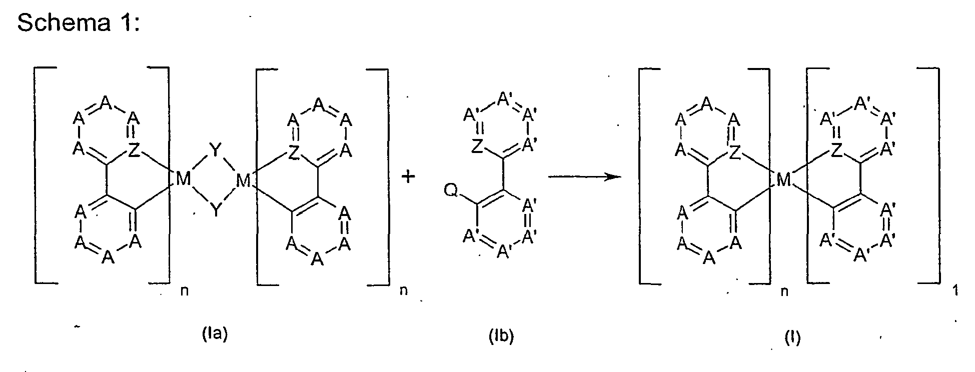

Erfindungsgemäße metallhaltige Edukte sind zweikernige Metallkomplexe, die der Formel (Ia) genügen. Diese sind im Allgemeinen leicht zugänglich. Bevorzugte metallhaltige Edukte sind zweikernige Metallkomplexe, die über Gruppen Y verbrückt sind, wobei Y bei jedem Auftreten gleich oder verschieden für F, CI, Br oder OR¹ steht. Besonders bevorzugte metallhaltige Edukte sind zweikernige Metallkomplexe, die über Gruppen Y verbrückt sind, wobei Y für Cl steht. Die Synthese solcher Verbindungen ist beispielsweise beschrieben in J. Sprouse et al., J. Am. Chem. Soc. 1984, 106, 6647. Diese Beschreibung ist via Zitat Bestandteil der vorliegenden Erfindung.

Erfindungsgemäße metallorganische Verbindungen (Ib) sind Verbindungen, die sich vom gewünschten Liganden dadurch ableiten, dass an das Kohlenstoffatom, das im Komplex an das Zentralatom bindet, ein Alkalimetall, ein Erdalkalimetall, Zinn oder Zink gebunden ist, wobei diese gegebenenfalls noch weitere organische Reste, wie beispielsweise Aryl- oder Alkylsubstituenten, oder anorganische Reste, wie beispielsweise Halogenide, tragen können. Dabei sind ausdrücklich auch kovalente Mehrzentrenbindungen zugelassen. Bevorzugte metallorganische Verbindungen sind solche, die in dieser Position ein Alkalimetall oder ein Erdalkalimetall enthalten. Besonders bevorzugt sind dabei Lithium, Natrium oder Magnesium; ganz besonders bevorzugt ist Magnesium. Unter den Magnesium-organischen Verbindungen werden so genannte Grignard-Verbindungen bevorzugt, die neben der Magnesium-Aryl-Bindung noch ein Halogenid tragen, also Verbindungen des Typs Aryl-Mg-Halogenid.

Das erfindungsgemäße molare Verhältnis von verbrücktem Metall-Dimer, [LₙM(µ-Cl)]₂, Verbindung (la), zum metallorganisch funktionalisierten Liganden, Verbindung (lb), beträgt 1 : 2 bis 1 : 50; bevorzugt ist ein Verhältnis von 1 : 2 bis 1 : 25; besonders bevorzugt ist ein Verhältnis von 1 : 2 bis 1 : 10.

Bevorzugte Reaktionsmedien sind offenkettige oder cyclische Ether, wie z. B. Diethylether, Methyl-*tert*-butylether, THF, Dioxan, Tetrahydropyran oder ähnliche, Oligo- oder Polyether z. B. Poly(ethylenglycol)-dimethylether, oder auch HMPTA oder offenkettige oder cyclische Dialkylharnstoffe, wie z. B. DMPU oder N,N'-Dimethylethylenharnstoff (1,3-Dimethylimidazolidin-2-on).

Erfindungsgemäß wird die Umsetzung in einem Temperaturbereich von-78°C bis 150 °C, bevorzugt im Bereich von -10°C bis 70 °C durchgeführt.

Erfindungsgemäß wird die Reaktion innerhalb von 0,5 bis 48 h durchgeführt, bevorzugt innerhalb von 3 bis 24 h. Eine Unterschreitung der genannten Reaktionszeit kann einen unvollständigen Umsatz des eingesetzten metallhaltigen Edukts zur Folge haben, was zu Ausbeuteverlusten und zur Verunreinigung des Produkts führt.

Das in dieser Erfindung beschriebene Verfahren bietet weiterhin insbesondere den Vorteil, dass eine große Vielfalt heteroleptischer dihalogenierter Komplexe, wie sie beispielsweise als Monomere für Polymerisationen verwendet werden können, einfach und hochrein zugänglich sind.

Ein weiterer Aspekt dieser Erfindung ist daher ein Verfahren gemäß Schema 2 oder Schema 3 zur Synthese dihalogenierter tris-ortho-metallierter Rhodium- und Iridiumkomplexe bzw. monohalogenierter bis-ortho-metallierter Palladium- und Platinkomplexe, ausgehend vom verbrückten Metall-Dimer [LₙM(µ-Y)]₂, das am Phenylring in para-Position zum koordinierenden C-Atom ein Wasserstoff trägt; diese Position wird im ersten Schritt halogeniert und in einem weiteren Schritt, gemäß dem ersten Aspekt der Erfindung, mit einem metallorganischen Derivat eines weiteren Liganden umgesetzt. Dabei kann die Grundstruktur des weiteren Liganden gleich oder verschieden der Struktur des ersten Liganden sein. 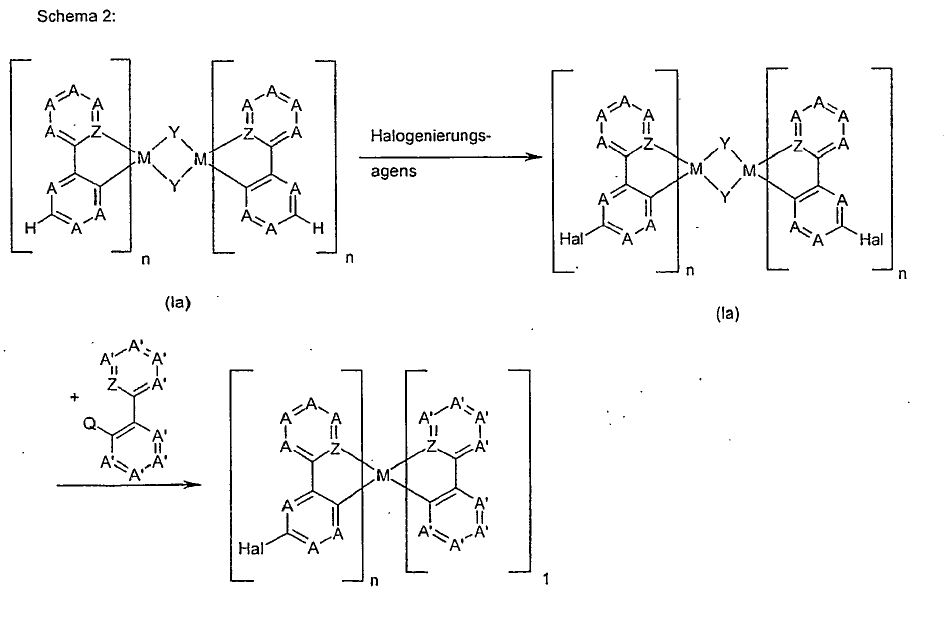 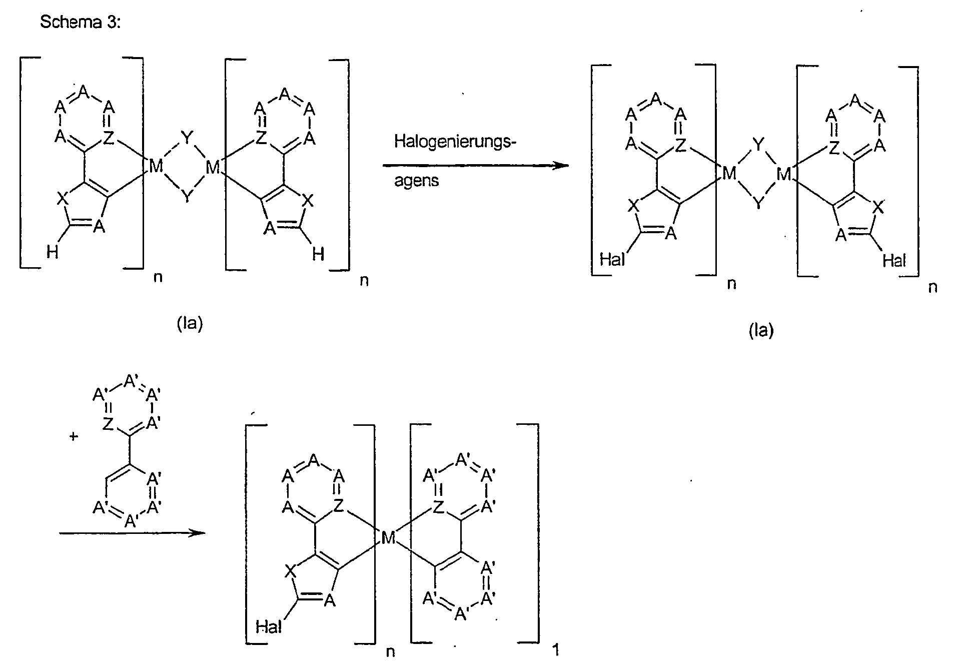 wobei für die verwendeten Symbole und Indizes Folgendes gilt:
M, Z, A, A', R, R', R¹, Q, Y und n haben dieselbe Bedeutung, wie unter Formel (l), (la) und (lb) angegeben;
   - Hal: ist bei jedem Auftreten gleich oder verschieden Cl, Br, I;
   - X: ist bei jedem Auftreten gleich oder verschieden N-R¹, O, S oder Se, bevorzugt S.

Wie die Halogenierung der verbrückten Metall-Dimere [LₙM(µ-Y)]₂ (erster Schritt in Schema 2 bzw. Schema 3) durchgeführt werden kann, ist beispielsweise in

WO 02/060910 bzw. in der nicht offen gelegten Anmeldung DE 10251986.2 beschrieben.

Die metallorganischen Derivate (Ib) des Liganden, der für das Verfahren gemäß Schema 1, Schema 2 und Schema 3 eingesetzt wird, lassen sich leicht nach Methoden erzeugen, wie sie dem Fachmann allgemein geläufig sind. So können diese Verbindungen beispielsweise aus den entsprechenden halogenierten Verbindungen, bevorzugt aus den chlorierten, bromierten oder iodierten Verbindungen, durch Metall-Halogen-Austausch hergestellt werden. Dafür bieten sich beispielsweise Reaktionen mit elementarem Magnesium, Natrium, Lithium oder Zink an, aber auch beispielsweise die Umsetzung mit Alkyllithium-Verbindungen, wie sie dem Fachmann allgemein bekannt sind. Die entsprechenden halogenierten Derivate des Liganden können durch direkte Halogenierung des Liganden erhalten werden, beispielsweise wenn es sich dabei um einen elektronenreichen Heterocyclus handelt. So können beispielsweise Thiophen- oder Benzothiophenhaltige Liganden direkt bromiert werden. Eine andere Möglichkeit besteht darin, die Halogenfunktionalität bereits in den Vorstufen der Ligandensynthese einzuführen. Beispielsweise kann auf diese Weise aus 2-Brompyridin und 2-Chlorbenzolboronsäure durch Suzuki-Kupplung 2-(ortho-Chlorphenyl)-pyridin synthetisiert werden. Die Chlorgruppe lässt sich dann beispielsweise gegen Magnesium oder Lithium austauschen.

Die im Stand der Technik beschriebenen Verbindungen der Formel (l) sind bislang nur in Ausbeuten von ca. 50 % und weniger zugänglich gewesen und mussten mittels aufwändiger chromatographischer Methoden, häufig mit umweltschädlichen, halogenierten Lösemitteln, aufgereinigt werden. Durch das erfindungsgemäße Verfahren können jedoch Verbindungen (I) in Reinheiten von mehr als 99,0 % erhalten werden, ohne dass chromatographische Verfahren notwendig sind.

Das erfindungsgemäße Verfahren bietet den Vorteil, heteroleptische Iridium-Komplexe in einer großen Bandbreite und einer hohen Reinheit gut zugänglich zu machen. Dabei ist insbesondere hervorzuheben, dass für die Synthese keine Übergangsmetallsalze, wie beispielsweise Silbersalze, eingesetzt werden müssen, die hinterher als Verunreinigung im Metallkomplex verbleiben. Gegenüber dem Verfahren in DE 10223337.3 bietet das erfindungsgemäße Verfahren den Vorteil, für eine größere Bandbreite an Liganden sehr gute Ergebnisse zu liefern. Insbesondere bietet dieses Verfahren einen Zugang zu einpolymerisierbaren Iridium-Komplexen, die bisher in diesem Maße und in dieser Vielfalt nicht zugänglich waren. Da Iridium-Komplexe, die kovalent an Polymere gebunden sind, als Ausgangsprodukte für die Weiterentwicklung lichtemittierender Polymere betrachtet werden, stellt das Verfahren, das die Grundbausteine (Monomere) dafür zur Verfügung stellt, einen wichtigen Schritt in diese Richtung dar.

Die vorliegende Erfindung wird durch die nachfolgenden Beispiele näher erläutert, ohne sie jedoch auf diese einschränken zu wollen. Dem Fachmann auf dem Gebiet der organischen und metallorganischen Synthese ist es hiermit ohne weitere erfinderische Tätigkeit möglich, an weiteren Systemen - wie oben beschrieben - die erfindungsgemäßen Umsetzungen durchzuführen.

### Beispiele

Die nachfolgenden Synthesen wurden bis zur Aufarbeitung unter einer trockenen Stickstoff- oder Argonatmosphäre unter Verwendung wasserfreierLösungsmittel durchgeführt. Die verwendeten Edukte (Iridium(III)-chlorid n H₂O und 2-Phenylpyridin, im Folgenden abgekürzt als PPy) wurden bei ABCR kommerziell erworben und ohne weitere Reinigung verwendet.
Folgende Synthesen wurden gemäß der Literatur durchgeführt:
[Di-(µ-chloro)-tetrakis[(2-pyridinyl-κN-phenyl)-κC]-di-iridium(III) (im Folgenden abgekürzt als [(PPy)₂Ir(µ-Cl)]₂) und Derivate dieser Verbindung gemäß J. Sprouse et al., J., Am. Chem. Soc. 1984, 106, 6647; 2-(2'-Pyridyl)-benzothiophen (im Folgenden abgekürzt als BTP) gemäß EP 1191612; und 2-(2'-Chlorphenyl)-pyridin gemäß V. Martinez-Barrasa et al., Org. Lett. 2000, 2, 3933.

### Beispiel 1: Bromierung von [(PPy)₂lr(µ-Cl)]₂

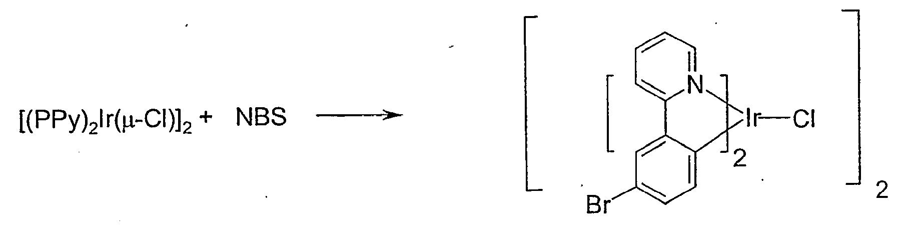

In einem 1000mL Vierhalskolben mit mechanischem Rührer, Argonüberlagerung und Innenthermometer wurden 11,6 g (10,8 mmol) [(PPy)₂Ir(µ-Cl)]₂ in 370 mL Dichlormethan gelöst und mit Argon gesättigt. Es wurden 7,7 g (43,1 mmol) N-Bromsuccinimid und 771 mg FeCl₃ zugegeben, und die Lösung wurde unter Lichtausschluss über Nacht gerührt. Dann wurden 75 mL EtOH und 45 mL Wasser zugegeben, und das Dichlormethan wurde im Vakuum entfernt. Der Niederschlag wurde abgesaugt, mit EtOH und Heptan gewaschen und im Vakuum getrocknet. Es wurden 14,9 g (10,7 mmol, 99,4 % d. Th.) des Produktes [(Br-PPy)₂Ir(µ-Cl)]₂ in einer Reinheit von 99 % gemäß NMR erhalten. Der entsprechende bromierte Ligand wird im Folgenden als Br-PPy abgekürzt. ¹H-NMR (500 MHz, DMSO-d₆): [ppm] 5,54 (d, J = 8,4 Hz, 2H), 6,15 (d, J = 8,4 Hz, 2H), 6,88 (d, J = 8,0 Hz, 2H), 6,95 (d, J = 8,1 Hz, 2H), 7,52 (t, J = 5,7 Hz, 2H), 7,62 (t, J = 6,4 Hz, 2H), 7,97 (s, 2H), 8,03 (s, 2H), 8,05 (t, J = 7,7 Hz, 2H), 8,13 (t, J = 7,4 Hz, 2H), 8,30 (d, J = 8,4 Hz, 2H), 8,38 (d, J = 8,1 Hz, 2H), 9,51 (d, J = 5,0 Hz, 2H), 9,76 (d, J = 5,4 Hz, 2H).

### Beispiel 2: Synthese von 3-Brom-2-(2`-pyridyl)-benzothiophen

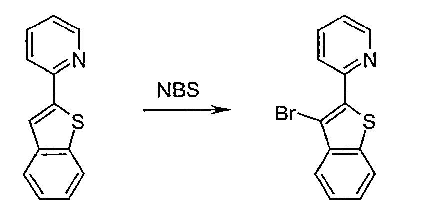

In einem 250 mL Vierhalskolben mit mechanischem Rührer wurden 2-(2'-Pyridyl)-benzothiophen BTP (4 g, 19 mmol) in 75 mL DMF gelöst. Unter Lichtausschluss wurden 3,55 g (20 mmol) N-Bromsuccinimid zugegeben, und die Reaktionsmischung wurde 12 h bei Raumtemperatur gerührt. Es wurden 100 mL H₂O zugegeben, der Niederschlag wurde abgesaugt, mit Methanol gewaschen und im Vakuum getrocknet. Weitere Aufreinigung erfolgte durch Umkristallisation aus Ethanol. Es wurden 3,56 g (65 %d. Th.) des Produktes erhalten. ¹H-NMR (500 MHz, CDCl₃): [ppm] 7,29 (ddd, J = 1,0 Hz, 4,9 Hz, 7,4 Hz, 1 H), 7,41-7,48 (m, 2H), 7,81 (td, J = 1,6 Hz, 7,4 Hz, 1 H), 7,85 (d, J = 8 Hz, 1 H), 8,50 (d, J = 8 Hz, 1 H), 8,69 - 8,70 (m, 1 H).

### Beispiel 3: Synthese von lr[(Br-PhPy)₂(BTP)]

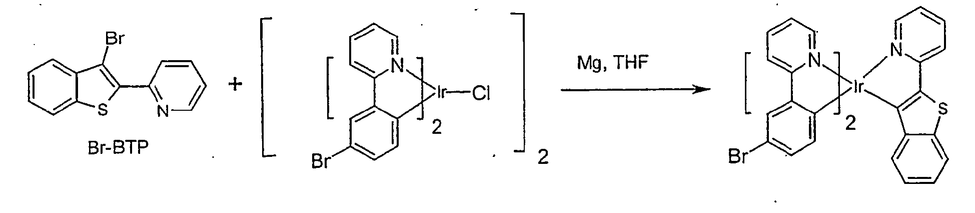

In einem trockenen 100 mL Dreihalskolben wurden 3-Brom-2-(2'-pyridylbenzothiophen (Br-BTP) (2,8 g, 9,7 mmol) und 1,2-Dichorethan (150 µl, 1,9 mmol) in 50 mL absolutem THF gelöst, in eine Suspension aus 233 mg (9,7 mmol) Magnesium in 3 mL THF getropft und 3 h unter Rückfluss gekocht. In einem trockenen 250 mL Vierhalskolben mit Innenthermometer und Argon-Überlagerung wurden 3 g (2,4 mmol) [(Br-PPy)₂lr(µ-Cl)]₂ in 190 mL absolutem THF suspendiert und auf 0 °C gekühlt. Zu dieser Suspension des Iridium-Komplexes wurde die Grignardlösung getropft. Nach 30 min. wurde das Kältebad entfernt, und es wurde über Nacht bei RT gerührt. Die Mischung wurde auf-10°C gekühlt, und es wurden 20 mL iso-PrOH und H₂O bis zur vollständigen Ausfällung zugegeben. Der Niederschlag wurde abgesaugt und getrocknet. Die Ausbeute betrug 3,91 g (4,6 mmol, 96,2 % d. Th.) bei einer Reinheit von 98,9 % gemäß HPLC. ¹H-NMR (500 MHz, DMSO-d₆): [ppm] 6,29 (d, J = 8,0 Hz, 1 H), 6,37 (d, J = 8,0 Hz, 1 H), 6,75- 6,78 (m, 4H), 6,91 - 6,94 (m, 2H), 7,02 (dd, J = 2,0 Hz, 7,7 Hz, 1 H), 7,15 (t, J = 7,0 Hz, 1 H), 7,50 (td, J = 1,6 Hz, 8,0 Hz, 1 H), 7,57 - 7,69 (m, 4H), 7,70 - 7,82 (m, 6H), 8,04 (d, J =5,0 Hz, 1 H).

### Beispiel 4: Synthese von Ir(Br-PPy)₂(PPy)

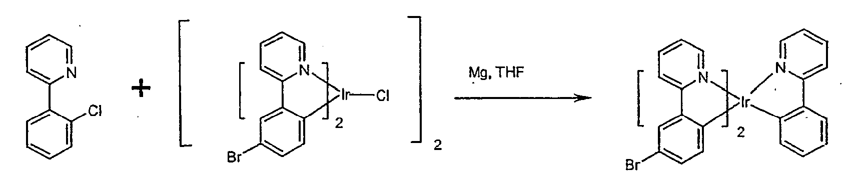

In einem trockenen 100 mL Dreihalskolben wurden 2-(2'-Chlorphenyl)pyridin (682 mg, 3,6 mmol) und 1,2-Dichorethan (30 µl, 0,4 mmol) in 20 mL absolutem THF gelöst, mit einer Suspension aus 90 mg (4 mmol) Magnesium in 5 mL THF versetzt und 3 h unter Rückfluss gekocht. In einem trockenen 250 mL Vierhalskolben mit Innenthermometer und Argon-Überlagerung wurden 600 mg (0,5 mmol) [(Br-PPy)₂Ir(µ-Cl)]₂ in 40 mL absolutem THF gelöst und auf 0 °C gekühlt. Zu dieser Lösung des Iridium-Komplexes wurde die Grignardlösung getropft. Nach 30 min. wurde das Kältebad entfernt, und es wurde über Nacht bei RT gerührt. Die Mischung wurde auf -10°C gekühlt, und es wurden 5 mL *ⁱ*PrOH und H₂O zugegeben. Das ausgefallene Produkt wurde in THF und Dichlormethan gelöst, mit Wasser gewaschen, über Na₂SO₄ getrocknet und die Lösungsmittel im Vakuum entfernt. Die Aufreinigung erfolgte durch Auskochen aus Heptan. Die Ausbeute betrug 791 mg (0,97 mmol, 97,3 % d. Th.) bei einer Reinheit von 99,4 % gemäß HPLC. ¹H-NMR (500 MHz, CDCl₃): [ppm] 6,27 (d, J = 8,4 Hz, 1 H), 6,44 (d, J = 7,7 Hz, 1 H), 6,76 (q, J = 7,4 Hz, 2H), 6,90 - 6,92 (m, 3H), 6,95- 7,04 (m, 3H), 7,49 (t, J =7,7 Hz, 1 H), 7,54 - 7,58 (m, 2H), 7,64 (td, J = 1,4 Hz, 7,4 Hz, 1 H), 7,72 - 7,78 (m, 5H), 7,90 (d, J = 5,4.Hz, 1 H), 7,94 (d, J=8,1 Hz, 1 H), 8,07 (d, J = 6,1 Hz, 1 H).

### Beispiel 5: V ergleichsbeispiel

Die Synthese der Zielstruktur aus Beispiel 3 wurde wiederholt mit dem Verfahren, das in DE 10223337.3 als nächst liegender Stand der Technik beschrieben ist. Dafür wurde [(Br-PPy)₂Ir(µ-Cl)]₂ (2,93 g, 2,5 mmol) umgesetzt mit 25 Äquivalenten BTP (2,11 g, 10 mmol) unter Zusatz von 0,73 g (5,5 mmol) Aluminium(III)chlorid in 75 mL Dekalin. Die Reaktionsmischung wurde 48 h bei 180 °C gerührt. Anschließend wurde die Reaktionsmischung auf eine Mischung aus 300 mL Ethanol und 300 mL 1M Salzsäure gegossen. Es wurde 5 min. gerührt, dann wurde der feinkristalline Niederschlag über eine Glasfilternutsche (P4) abgesaugt, mit Ethanol/Wasser (1:1) und Ethanol gewaschen und im Vakuum getrocknet. Die Ausbeute betrug 3,14 g (74 % d. Th.) bei einer Reinheit von 91 %. Das Produkt musste chromatographisch (Silica, Hexan : Ethylacetat 6 : 1) von Zersetzungsprodukten abgetrennt werden, die nicht näher charakterisiert wurden.

## Patentansprüche

1. Verfahren zur Herstellung von Verbindungen (I), 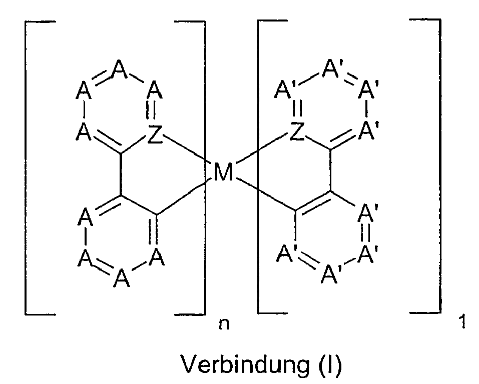 wobei für die verwendeten Symbole und Indizes Folgendes gilt:
M ist gleich oder verschieden bei jedem Auftreten Rh, Ir, Pd oder Pt;
Z ist gleich oder verschieden bei jedem Auftreten N oder P;
A, A' ist gleich oder verschieden bei jedem Auftreten N, C-H oder C-R bzw. C-R'; oder aber zwei benachbarte Ringatome A-A bzw. A'-A' stehen bei jedem Auftreten gleich oder verschieden für S, O, Se oder N-R¹ mit der Maßgabe, dass diese Einheiten nicht mehr als einmal pro Ring auftreten;
R, R' ist gleich oder verschieden bei jedem Auftreten F, Cl, Br, NO₂, CN, eine geradkettige, verzweigte oder cyclische Alkyl- oder Alkoxygruppe mit 1 bis 20 C-Atomen, wobei ein oder mehrere nicht benachbarte CH₂-Gruppen durch -CR¹=CR¹-, -C≡C-, -O-, -S-, -NR¹-, oder-CONR¹- ersetzt sein können und wobei ein oder mehrere H-Atome durch F ersetzt sein können, oder eine Aryl-, Heteroaryl-, Aryloxy- oder Arylaminogruppe mit 4 bis 14 C-Atomen, die durch einen oder mehrere, nicht aromatische Reste R substituiert sein können; wobei mehrere Substituenten R, sowohl am selben Ring als auch an den beiden unterschiedlichen Ringen zusammen wiederum ein weiteres mono- oder polycyclisches, aliphatisches oder aromatisches Ringsystem aufspannen können;
R¹ ist gleich oder verschieden bei jedem Auftreten H oder ein aliphatischer oder aromatischer Kohlenwasserstoffrest mit 1 bis 20 C-Atomen;
n ist 1 für M = Pd oder Pt und ist 2 für M = Rh oder Ir;
durch Umsetzung einer Verbindung (la), 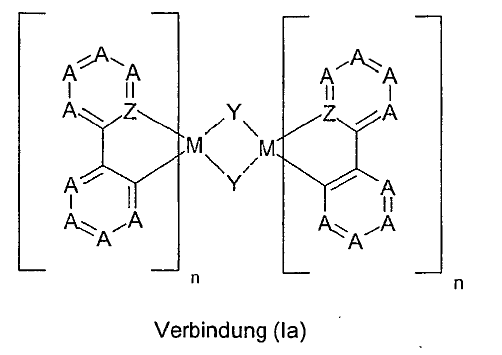 worin gilt:
Y ist bei jedem Auftreten gleich oder verschieden F, Cl, Br, l, OR¹, R¹COO, SR¹, N(R¹)₂;
die weiteren Symbole und Indizes sind wie für Verbindung (I) definiert,
**dadurch gekennzeichnet, dass** Verbindung (la) mit einer metallorganischen Verbindung (Ib) 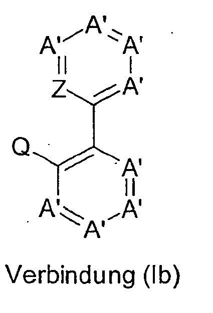 umgesetzt wird
wobei Q für ein Alkalimetall, ein Erdalkalimetall oder Erdalkalihalogenid, Trialkylzinn oder Zink oder ein Zinkhalogenid steht, das gegebenenfalls noch mit weiteren organischen Gruppen substituiert sein kann, und die weiteren Symbole und Indizes die für Verbindung (I) genannte Bedeutung haben.

2. Verfahren gemäß Anspruch 1, **dadurch gekennzeichnet, dass** metallhaltige Edukte zweikernige Metallkomplexe der Formel (la) sind, in denen Y bei jedem Auftreten gleich oder verschieden F, Cl, Br oder OR¹ bedeutet.

3. Verfahren gemäß Anspruch 1 und / oder 2, **dadurch gekennzeichnet, dass** Q ein Alkalimetall oder ein Erdalkalimetall bzw. Erdalkalihalogenid darstellt.

4. Verfahren gemäß Anspruch 3, **dadurch gekennzeichnet, dass** Q für Lithium, Natrium oder Magnesium bzw. ein Magnesiumhalogenid steht.

5. Verfahren gemäß Anspruch 4, **dadurch gekennzeichnet, dass** Q für Magnesium bzw. ein Magnesiumhalogenid steht.

6. Verfahren gemäß einem oder mehreren der Ansprüche 1 bis 5, **dadurch gekennzeichnet, dass** das molare Verhältnis von verbrücktern Metall-Dimer [LₙM(µ-Y)]₂, Verbindung (la), zum metallorganisch funktionalisierten Liganden, Verbindung (Ib) 1 : 2 bis 1 : 50 beträgt.

7. Verfahren gemäß einem oder mehreren der Ansprüche 1 bis 6, **dadurch gekennzeichnet, dass** als Lösemittel offenkettige oder cyclische Ether, offenkettige oder cyclische Dialkylharnstoffe oder HMPTA verwendet werden.

8. Verfahren gemäß einem oder mehreren der Ansprüche 1 bis 7, **dadurch gekennzeichnet, dass** die Umsetzung in einem Temperaturbereich von -78 °C bis 150 °C durchgeführt wird.

9. Verfahren gemäß einem oder mehreren der Ansprüche 1 bis 8, **dadurch gekennzeichnet, dass** die Reaktion innerhalb von 0,5 bis 48 h durchgeführt wird.

10. Verfahren zur Synthese dihalogenierter tris-ortho-metallierter Rhodium- und Iridiumkomplexe oder monohalogenierter bis-ortho-metallierter Palladium- und Platinkomplexe, **dadurch gekennzeichnet, dass** in einem Reaktionsschritt ein Verfahren gemäß einem oder mehreren der Ansprüche 1 bis 9 verwendet wird.

11. Verfahren gemäß Anspruch 10, **dadurch gekennzeichnet, dass** es gemäß Schema 2 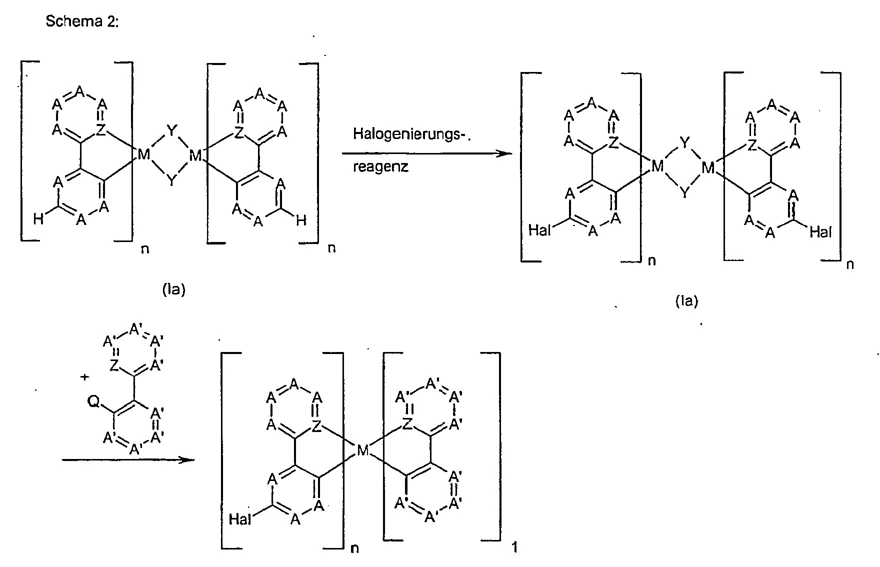 oder Schema 3 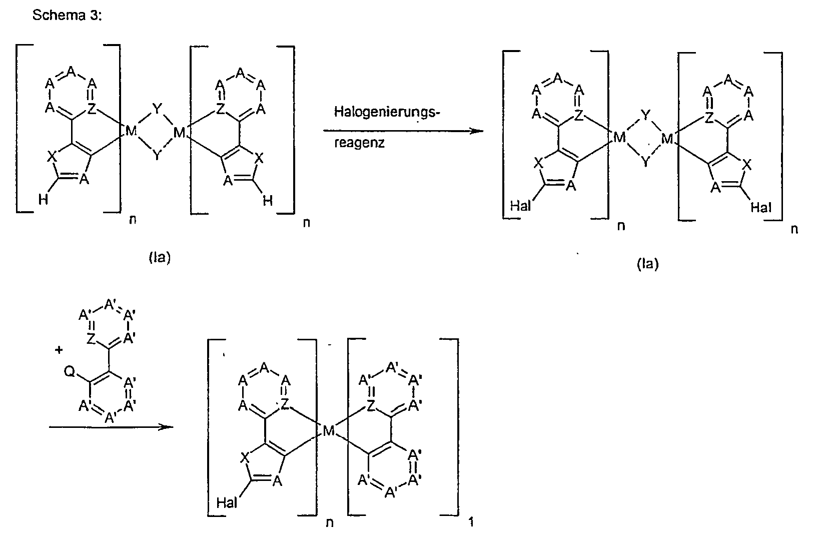 durchgeführt wird, wobei die verwendeten Symbole und Indizes M, Z, A, A', R, R', R¹, Q, Y und n dieselbe Bedeutung, wie in Anspruch 1 definiert haben und
Hal ist bei jedem Auftreten gleich oder verschieden Cl, Br, l;
X ist bei jedem Auftreten gleich oder verschieden N-R¹, O, S oder Se.

## Claims

1. Process for the preparation of compounds (I) 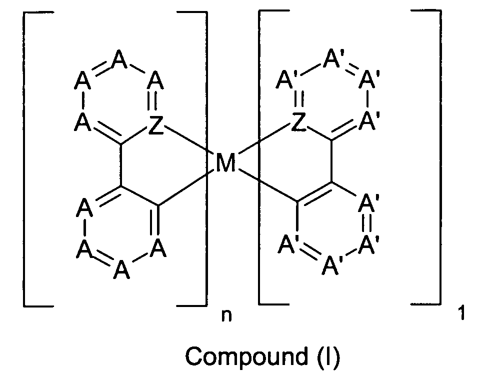 where the following applies to the symbols and indices used:
M is, identically or differently on each occurrence, Rh, Ir, Pd or Pt;
Z is, identically or differently on each occurrence, N or P;
A, A' are, identically or differently on each occurrence, N, C-H or C-R or C-R'; or alternatively two adjacent ring atoms A-A or A'-A' stand on each occurrence, identically or differently, for S, O, Se or N-R¹, with the proviso that these units do not occur more than once per ring;
R, R' are, identically or differently on each occurrence, F, Cl, Br, NO₂, CN, a straight-chain, branched or cyclic alkyl or alkoxy group having 1 to 20 C atoms, where one or more non-adjacent CH₂ groups may be replaced by -CR¹=CR¹-, -C≡C-, -O-, -S-, -NR¹- or -CONR¹- and where one or more H atoms may be replaced by F, or an aryl, heteroaryl, aryloxy or arylamino group having 4 to 14 C atoms, which may be substituted by one or more non-aromatic radicals R; where a plurality of substituents R, both on the same ring and also on the two different rings, may together in turn form a further mono- or polycyclic, aliphatic or aromatic ring system;
R¹ is, identically or differently on each occurrence, H or an aliphatic or aromatic hydrocarbon radical having 1 to 20 C atoms;
n is 1 for M = Pd or Pt and is 2 for M = Rh or Ir;
by reaction of a compound (la) 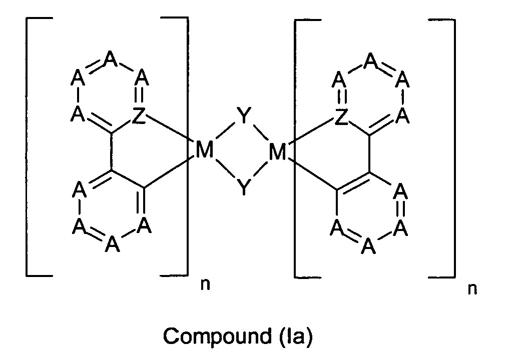 in which:
Y is on each occurrence, identically or differently, F, Cl, Br, l, OR¹, R¹COO, SR¹, N(R¹)₂;
the other symbols and indices are as defined for compound (I),
**characterised in that** compound (Ia) is reacted with an organometallic compound (Ib) 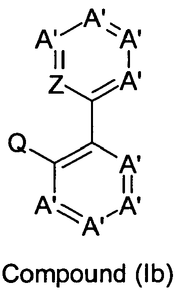 where Q stands for an alkali metal, an alkaline-earth metal or alkaline-earth metal halide, trialkyltin or zinc or a zinc halide, which may optionally also be substituted by further organic groups, and the other symbols and indices have the meaning mentioned for compound (1).

2. Process according to Claim 1, **characterised in that** metal-containing starting materials are binuclear metal complexes of the formula (Ia), in which Y on each occurrence, identically or differently, denotes F, Cl, Br or OR¹.

3. Process according to Claim 1 and / or 2, **characterised in that** Q represents an alkali metal or an alkaline-earth metal or alkaline-earth metal halide.

4. Process according to Claim 3, **characterised in that** Q stands for lithium, sodium or magnesium or a magnesium halide.

5. Process according to Claim 4, **characterised in that** Q stands for magnesium or a magnesium halide.

6. Process according to one or more of Claims 1 to 5, **characterised in that** the molar ratio of bridged metal dimer [LₙM(µ-Y)]₂, compound (Ia), to the organo-metallically functionalised ligand, compound (Ib), is 1 : 2 to 1 : 50.

7. Process according to one or more of Claims 1 to 6, **characterised in that** the solvents used are open-chain or cyclic ethers, open-chain or cyclic dialkylureas or HMPTA.

8. Process according to one or more of Claims 1 to 7, **characterised in that** the reaction is carried out in a temperature range from -78°C to 150°C.

9. Process according to one or more of Claims 1 to 8, **characterised in that** the reaction is carried out within 0.5 to 48 h.

10. Process for the synthesis of dihalogenated tris-ortho-metallated rhodium and iridium complexes or monohalogenated bis-ortho-metallated palladium and platinum complexes, **characterised in that** a process according to one or more of Claims 1 to 9 is used in one reaction step.

11. Process according to Claim 10, **characterised in that** it is carried out in accordance with Scheme 2 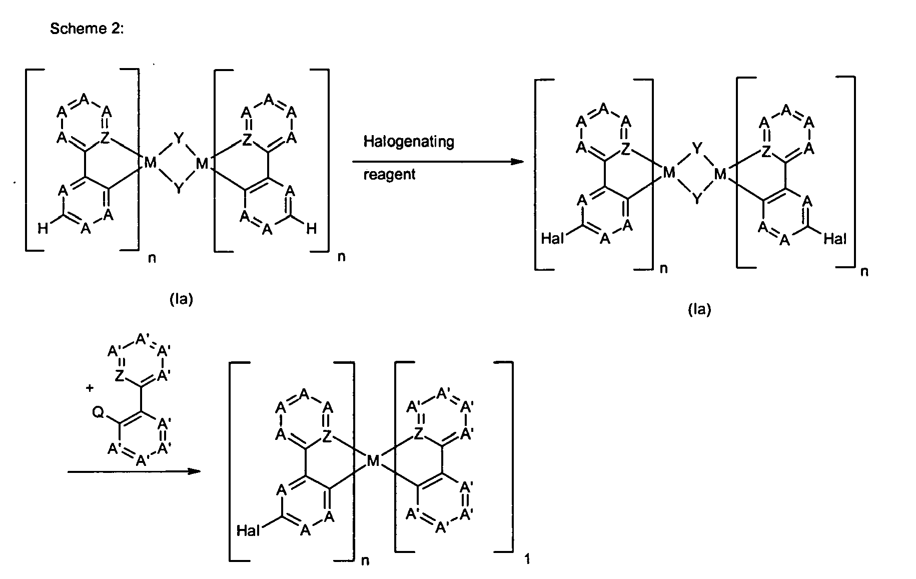 or Scheme 3 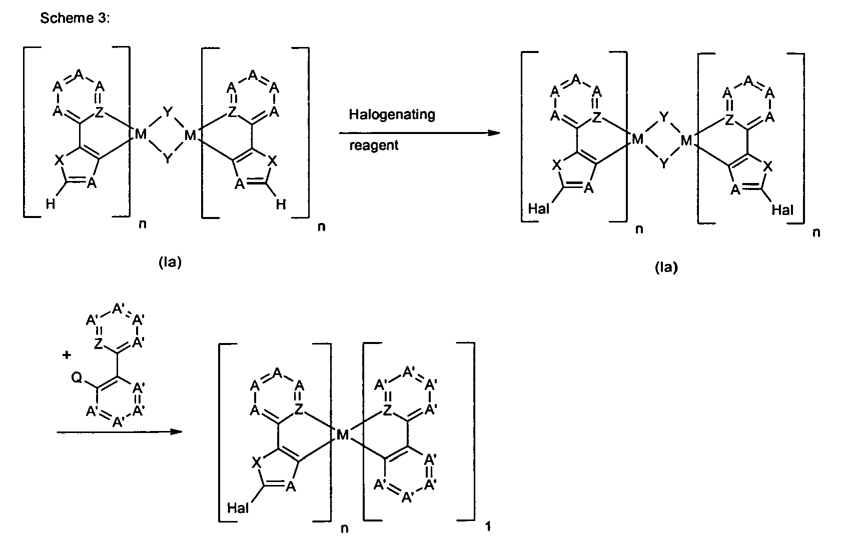 where the symbols and indices M, Z, A, A', R, R', R¹, Q, Y and n used have the same meaning as defined in Claim 1, and
Hal is on each occurrence, identically or differently, Cl, Br, l;
X is on each occurrence, identically or differently, N-R¹, O, S or Se.

## Revendications

1. Procédé pour la préparation de composés (I) 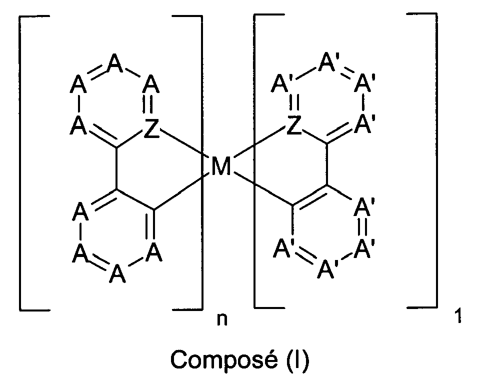 dans lequel ce qui suit s'applique aux symboles et indices utilisés :
M est, de manière identique ou différente lors de chaque occurrence, Rh, Ir, Pd ou Pt ;
Z est, de manière identique ou différente lors de chaque occurrence, N ou P ;
A, A' sont, de manière identique ou différente lors de chaque occurrence, N, C-H ou C-R ou C-R' ; ou à titre d'alternative, deux atomes de cycles adjacents A-A ou A'-A' représentent, lors de chaque occurrence, de manière identique ou différente, S, O, Se ou N-R¹, étant entendu que ces unités ne surviennent pas plus d'une fois par cycle ;
R, R' sont, de manière identique ou différente lors de chaque occurrence, F, CI, Br, NO₂, CN, un groupe alkyle ou alcoxy en chaîne droite, ramifiée ou cyclique comportant de 1 à 20 atomes de C, où un ou plusieurs groupes CH₂ non adjacents peuvent être remplacés par -CR¹=CR¹-, -C≡C-, -O-, -S-, -NR¹- ou-CONR¹- et où un ou plusieurs atomes de H peuvent être remplacés par F, ou un groupe aryle, hétéroaryle, aryloxy ou arylamino comportant de 4 à 14 atomes de C, qui peut être substitué par un ou plusieurs radicaux non aromatiques R ; où une pluralité de substituants R, à la fois sur le même cycle et également sur les deux cycles différents (tous sur le même anneau et également sur les
R¹ deux anneaux différents) peuvent ensemble à leur tour former un autre système cyclique mono- ou polycyclique, aliphatique ou aromatique ; est, de manière identique ou différente lors de chaque occurrence, H ou un radical hydrocarbone aliphatique ou aromatique comportant de 1 à 20 atomes de C ;
n est 1 pour M = Pd ou Pt et est 2 pour M = Rh ou lr ;
par réaction d'un composé (la) 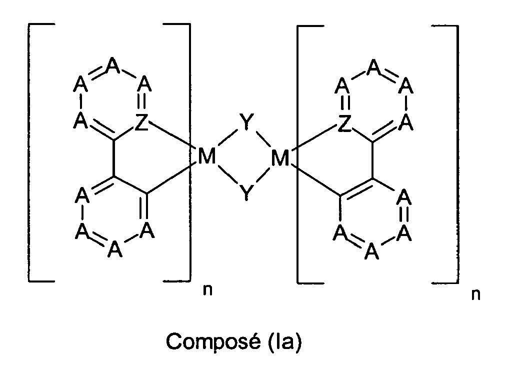 dans lequel:
Y est, lors de chaque occurrence, de manière identique ou différente, F, CI, Br, I, OR¹, R¹COO, SR¹, N(R¹)₂ ;
les autres symboles et indices sont comme définis pour le composé (l),
**caractérisé en ce que** le composé (la) est amené à réagir avec un composé organométallique (Ib) 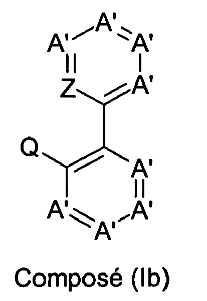 dans lequel Q représente un métal alcalin, un métal alcalinoterreux ou un halogénure de métal alcalinoterreux, trialkylstannyl ou zinc ou un halogénure de zinc, qui peut en option également être substitué par d'autres groupes organiques, et les autres symboles et indices ont la signification mentionnée pour le composé (l).

2. Procédé selon la revendication 1, **caractérisé en ce que** les matériaux de départ contenant un métal sont des complexes métalliques binucléaires de la formule (la), où Y, lors de chaque occurrence, de manière identique ou différente, représente F, Cl, Br ou OR¹.

3. Procédé selon la revendication 1 et/ou 2, **caractérisé en ce que** Q représente un métal alcalin ou un métal alcalinoterreux ou un halogénure de métal alcalinoterreux.

4. Procédé selon la revendication 3, **caractérisé en ce que** Q représente lithium, sodium ou magnésium ou un halogénure de magnésium.

5. Procédé selon la revendication 4, **caractérisé en ce que** Q représente magnésium ou un halogénure de magnésium.

6. Procédé selon une ou plusieurs des revendications 1 à 5, **caractérisé en ce que** le rapport molaire d'un dimère métallique ponté [LₙM(µ-Y)]₂, à savoir le composé (la), sur le ligand fonctionnalisé organométalliquement, à savoir le composé (lb), est de 1:2 à 1:50.

7. Procédé selon une ou plusieurs des revendications 1 à 6, **caractérisé en ce que** les solvants utilisés sont des éthers en chaîne ouverte ou cyclique, des dialkylurées en chaîne ouverte ou cyclique ou HMPTA**.**

8. Procédé selon une ou plusieurs des revendications 1 à 7, **caractérisé en ce que** la réaction est mise en oeuvre dans une plage de températures qui va de -78°C à 150°C.

9. Procédé selon une ou plusieurs des revendications 1 à 8, **caractérisé en ce que** la réaction est mise en oeuvre à l'intérieur de 0,5 à 48 h.

10. Procédé pour la synthèse de complexes de rhodium et d'iridium tris-ortho-métallatés dihalogénés ou de complexes de palladium et de platine bis-ortho-métallatés monohalogénés, **caractérisé en ce qu'**un procédé selon une ou plusieurs des revendications 1 à 9 est utilisé au niveau d'une seule étape de réaction.

11. Procédé selon la revendication 10, **caractérisé en ce qu'**il est mis en oeuvre conformément au Schéma 2 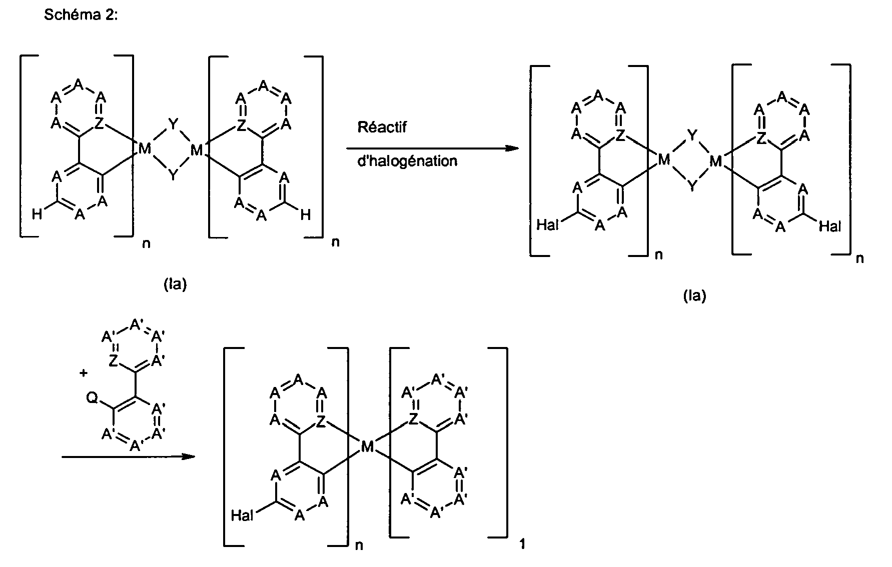 ou au Schéma 3 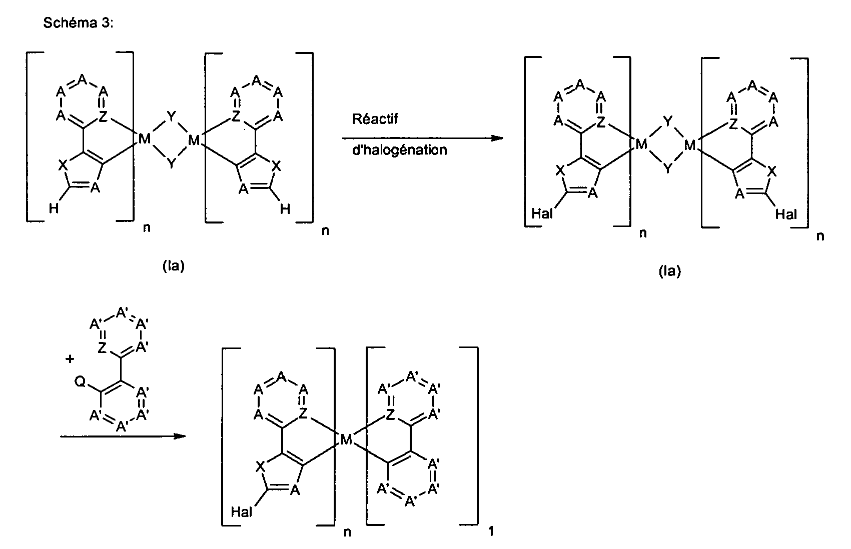 dans lesquels les symboles et indices M, Z, A, A', R, R', R¹, Q, Y et n utilisés présentent la même signification que définie selon la revendication 1, et
Hal est, lors de chaque occurrence, de manière identique ou différente, CI, Br, I;
X est, lors de chaque occurrence, de manière identique ou différente, N-R¹, O, S ou Se.
